# EUROPÄISCHE PATENTSCHRIFT

(11) **EP 0 556 559 B1**
(45) Veröffentlichungstag und Bekanntmachung des Hinweises auf die Patenterteilung: **17.09.1997**
(21) Anmeldenummer: 93100499.8
(22) Anmeldetag: 15.01.1993
(51) Int. Cl.: B05D 7/20, H01B 13/16, B05C 3/12, C03C 25/04

(54) **Verfahren zur Herstellung von hitzebeständigen Überzügen auf Drähten oder Fasern und dazu geeignete Vorrichtung**
Method for producing heat resistant coatings upon wires or fibres and device suitable for performing it
Procédé pour fabriquer des revêtements résistant à la chaleur sur des fils métalliques ou fibres et dispositif apte à ce procédé

(30) Priorität: 20.01.1992 DE 4201376
(43) Veröffentlichungstag der Anmeldung: 25.08.1993
(73) Patentinhaber: Herberts Gesellschaft mit beschränkter Haftung, 42285 Wuppertal (DE)
(72) Erfinder: Winkler, Diethard, W-5600 Wuppertal 2 (DE); Sohnius, Sabine, W-4000 Düsseldorf (DE); Höveler, Guido, W-4019 Monheim (DE); Schülke, Wolfgang, W-5805 Breckerfeld (DE); Krause, Rainer, W-5600 Wuppertal 1 (DE)
(74) Vertreter: Türk, Gille, Hrabal, Leifert

(56) Entgegenhaltungen:
- EP-A- 0 022 452
- EP-A- 0 111 122
- AT-B- 211 888
- DE-A- 1 595 005
- DE-A- 1 645 435
- DE-A- 1 814 497
- DE-A- 2 346 393
- DE-A- 2 542 706
- DE-A- 3 222 427
- DE-A- 3 241 345
- DE-A- 3 544 548
- DE-A- 3 834 859
- DE-A- 3 917 197
- DE-C- 756 058
- DE-C- 840 866

## Beschreibung

Die Erfindung betrifft ein Verfahren zur Herstellung von hitzebeständigen, isolierenden Überzügen auf elektrischen Leitern, insbesondere auf Drähten, sowie jedoch auch auf faserartigen Materialien. Dazu werden carboxyl- und/oder amidgruppenhaltige Verbindungen mit Polyisocyanaten unmittelbar vor der Verarbeitung kontinuierlich in einer dem Verbrauch entsprechenden Menge gemischt und dem Draht zugeführt. Die Vernetzung erfolgt durch Wärmezufuhr.

In der DE-C-840 866 wird die Herstellung von Lacküberzügen auf Drähten beschrieben, bei der Mischungen von mehrwertigen Alkoholen und Diisocyanaten aus getrennten Vorratsgefäßen einem Auftragsbehälter entsprechend dem erforderlichen Mischungsverhältnis zugeführt werden.

Aus der DE-A-756 058 ist die Herstellung von polymeren Überzügen durch Umsetzung von Diisocyanaten und Verbindungen mit zwei oder mehr reaktionsfähigen Wasserstoffatomen allgemein bekannt. Beispiel 10 beschreibt die Lackierung eines Kupferdrahts mit einer Mischung aus Diisocyanaten und einem hydroxylgruppenhaltigen Polyester.

In der Praxis erwiesen sich die Bäder sowie das Verfahren z. B. zur Herstellung von Polyurethandrahtlacken als ungeeignet, da keine definierten Schichtstärken der Lacküberzüge zu erhalten waren. Aus diesem Grunde wurden verkappte Polyisocyanate entwickelt, die diesen Nachteil nicht aufweisen sollten. (O. Bayer: Neuere Entwicklungen des DiisocyanatPolyadditions-Verfahrens / FATIPEC 1957, S. 14 und 15 sowie Houben-Weyl, 1962, Bd. 14/2, S. 78 und BAYER-Produkte für die Elektroisolierung, Punkt 1.1/2 bis 1.1/3, Stand 1987).

Drahtlacke aus hydroxylgruppenhaltigen Kondensationsharzen und phenolverkappten Polyisocyanaten werden heute in großem Umfang für die Herstellung leicht verzinnbarer Lackdrähte verwendet. Die kresolgelösten Lacke weisen in der Regel nur Feststoffgehalte von etwa 25 - 35 % auf. Die damit erhaltenen Überzüge besitzen aufgrund der gewünschten Instabilität der Urethangruppen für viele Anwendungen nicht ausreichende thermische Eigenschaften.

Die Verwendung von Polyesterimiden, Polyesteramidimiden, Polyimiden und Polyamidimiden als hoch wärmebeständige elektrische Isolationsmaterialien für elektrische Leiter wie z. B. Wickeldrähte aus Kupfer oder Aluminium ist bekannt. ("Moderne Elektroisolierlacke - ein Fortschritt bei hochtemperaturbeständigen Kunststoffen", Kunststoffe, 61. Jahrgang, 1971, Seiten 46-56, Carl Hanser Verlag, München).

Polyesterimide und Polyesteramidimide werden z. B. durch Kondensation eines Überschusses von Polyalkoholen wie Ethylenglykol, Tris(hydroxyethyl)-isocyanurat mit Terephthalsäure(dimethylester), Trimellithsäureanhydrid und Diaminodiphenylmethan hergestellt (DE-A-16 45 435). Als Lösungsmittel werden in der Regel Kresole in Verbindung mit aromatischen Kohlenwasserstoffen verwendet. Die Vernetzung erfolgt unter Abspaltung von Glykolen und erfordert einen hohen Energieaufwand. Bei dickeren Lackschichten können durch die abgespaltenen Glykole leicht Blasen oder Aufkocher entstehen.

Hochmolekulare aromatisch-aliphatische Polyamide werden für den Einsatz als Backlack mit besonders guter thermischer und chemischer Stabilität beschrieben. Sie sind in N-Methylpyrrolidon sowie aromatischen Kohlenwasserstoffen gelöst und weisen Feststoffgehalte von etwa 25-30 Gew.% bei einer Verarbeitungsviskosität von etwa 1000-2500 mPa.s auf. Versucht man, diese Verbindungen zur Anhebung des Feststoffgehalts niedriger zu kondensieren, so werden lagerinstabile Lösungen und ungenügende Eigenschaften des Lackfilms erhalten (US-A- 4 501 883).

Polyimide besitzen außerordentlich hohe thermische Stabilität.Sie werden beispielsweise durch Umsetzung von Tetracarbonsäureanhydriden (Pyromellithsäuredianhydrid, Benzophenontetracarbonsäuredianhydrid) und Diaminen (Diaminodiphenylmethan, Diaminodiphenylether) in stark polaren Lösungsmitteln (N-Methylpyrrolidon, Dimethylacetamid, Kresol) erhalten, wobei als lösliche Zwischenstufe Polyamidcarbonsäuren entstehen. Diese wandeln sich bei Wärmebehandlung unter Wasserabspaltung zu Polyimiden um. Die Lösungen besitzen niedrige Feststoffgehalte; ihre Lagerfähigkeit ist begrenzt, da die Zyklisierung zum Imid bereits bei Raumtemperatur langsam stattfindet und das entstehende Wasser zur allmählichen Hydrolysierung der Amidbindungen führt (s. auch DE-A- 15 95 005 und DE-A- 23 46 393).

Polyamidimide werden zur Isolierung von elektrischen Leitern sowohl als Grundlack (base-coat) als auch als Überzugslack (over-coat) mit hoher thermischer, mechanischer und chemischer Beständigkeit von Tricarbonsäureanhydriden mit Diisocyanaten (DE-A-25 42 706, DE-A-32 49 544). Dabei ist es notwendig, bis zu relativ hohen Molekulargewichten umzusetzen, um das geforderte Werteniveau bei gleichzeitig guter Lagerstabilität der Lacke zu erhalten. Die damit hergestellten Lacke sind in N-Methylpyrrolidon oder Kresol gelöst und weisen Feststoffgehalte von ca. 15 - 35 % auf (s. auch DE-A-12 56 418).

Die DE-A-35 44 548 schlägt zur Eigenschaftsverbesserung und Herstellung festkörperreicher Polyamidimidlacke die Mischung niedermolekularer, carboxylgruppenhaltiger Polyamidimid-Vorläufer mit vollverkappten Polyisocyanaten vor. Bei Verwendung phenolverkappter Polyisocyanate ist die Lagerstabilität der Lacke jedoch unzureichend. Die Viskosität steigt in kurzer Zeit deutlich an, die Lackierfähigkeit verschlechtert sich. Bei Verwendung alkoholverkappter Polyisocyanate wird die Lagerstabilität verbessert, die Aushärtungsgeschwindigkeit verschlechtert sich jedoch in unerwünschtem Maß.

Die Herstellung der Lackdrähte erfolgt üblicherweise durch mehrfaches kontinuierliches Auftragen des Drahtlacks auf den Kupferdraht mittels Filz- oder Düsenabstreifung. Nach jedem Auftrag wird der Lack bei Temperaturen zwischen ca. 300 und 700°C ausgehärtet. Lösungs- sowie Verkappungsmittel spalten beim Vernetzungsprozess ab und entweichen aus dem Lackfilm. Sie werden in der Regel katalytisch verbrannt und in Form von CO₂ an die Umwelt abgegeben. Für die Abspaltung der Verkappungsmittel muß beim Härtungsprozeß zusätzliche Energie aufgewendet werden.

Bei Verwendung der verkappten Polyisocyanate laufen bei der Hitzevernetzung mehrere Reaktionen nebeneinander ab. Zum einen verdunsten die Lösungsmittel, während gleichzeitig ein starker Viskositätsabfall der Bindemittel durch Temperaturerhöhung eintritt. Parallel dazu erfolgt die Vernetzung unter Abspaltung des Verkappungsmittels. Der Vorgang ist außerordentlich komplex und es ist schwierig, bei angehobenen Feststoffgehalten höhere Verarbeitungsgeschwindigkeiten zu erreichen, ohne die Lackoberfläche zu verschlechtern.

Die zur Filmbildung erforderliche hohe Temperatur zwischen ca. 300 und 700°C kann bereits zu pyrolytischen Abbaureaktionen während des Aushärtungsprozesses führen.

Aufgabe der Erfindung ist die Bereitstellung eines Verfahrens zur Herstellung von wärmebeständigen, elektrisch isolierenden Überzügen bzw. zur Lackierung von Drähten und faserigen Materialien, das zu gleichmäßigen Lackierungen führt; keine schädlichen Spaltprodukte freisetzt sowie die Lösungsmittelemissionen reduziert. Das Verfahren soll insbesondere zu isolierten Kupferdrähten mit hoher Wärmebeständigkeit führen.

Es hat sich gezeigt, daß diese Aufgabe durch eine Mehrkomponententechnik gelöst werden kann, wie sie bisher für die Lackierung von Drähten oder faserigen Materialien nicht bekannt war.

Die Erfindung betrifft daher ein Verfahren zur Herstellung von wärmebeständigen Überzügen auf Drähten oder faserigen Materialien durch Beschichten bzw. Lackieren mit flüssigen, Polyisocyanate enthaltenden, unmittelbar vor dem Aufbringen hergestellten Mischungen und anschließendes Aushärten, das dadurch gekennzeichnet ist, daß man
A) ein oder mehrere carboxyl- und/oder amidgruppenhaltige Polymere mit mindestens zwei Carboxyl- und/oder Amidgruppen im Molekül, einer OH-Zahl von unter 130, bevorzugt von unter 50 und einem Zahlenmittel des Molekulargewichts von 200 bis 5000, bevorzugt 500 bis 3000 im flüssigen Zustand mit
B) einem oder mehreren Polyisocyanaten mit mindestens zwei freien Isocyanatgruppen und einem Zahlenmittel des Molekulargewichts von 200 bis 3000, bevorzugt 250 bis 1500 im flüssigen Zustand mit gegebenenfalls
C) einer oder mehreren weiteren lacküblichen Komponenten im flüssigen Zustand
kontinuierlich unmittelbar vor dem Aufbringen auf den Draht in einem Verhältnis vermischt, daß auf jede Carboxylgruppe 0,5 bis 5,0, bevorzugt 0,8 bis 2,0 Isocyanatgruppen, sowie auf jede Amidgruppe 0,02 - 2,0, bevorzugt 0,1 - 1,0 Isocyanatgruppen entfallen, woei die Komponenten A, B oder C Katalysatoren und/oder übliche Additive enthalten können und daß man diese Mischung dem in kontinuierlicher Fortbewegung befindlichem Draht in einer dem Verbrauch entsprechenden Menge zuführt.

Das Verfahren ist nicht nur auf jeweils eine Komponente A, B oder C beschränkt. Es können auch mehrere Komponenten der Typen A, B oder C gleichzeitig zudosiert werden. Dadurch läßt sich die Anwendungsbreite des Verfahrens erweitern. Durch einfach Materialumstellung lassen sich isolierende, wärmebeständige Überzüge mit unterschiedlichen Eigenschaften herstellen.

Bevorzugt werden beim erfindungsgemäßen Verfahren die Einzelkomponenten A, B und C unmittelbar vor dem Auftrag in solchen Mengen vermischt, die der vor Ablauf der Aushärtungszeit aufzutragenden Menge des gemischten Überzugs entsprechen.

Je nach Wahl der Ausgangsverbindungen entstehen beim erfindungsgemäßen Verfahren bei der Vernetzung über Carboxylgruppen des Überzugsmittels Polyamide, Polyimide, Polyamidimide, Polyesteramide oder Polyesteramidimide. Diese können gegebenenfalls durch weitere heterocyclische Gruppen modifiziert sein.

Überraschenderweise wurde gefunden, daß auch eine Vernetzung über Amidgruppen in der Komponente A zu elektrisch isolierenden, thermisch sehr stabilen Überzügen führt. Die Amidgruppen weisen die allgemeinen Formel

R - NH - CO - R'

auf, wobei R und R' aliphatische, cycloaliphatische, heterocyclische, aromatische oder aromatisch-aliphatische Reste darstellen. Thermisch besonders stabile Überzüge werden mit aromatischen Resten erhalten. Verwendet man carboxylgruppenfreie Komponente(n) A, so müssen zumindest zwei, bevorzugt drei oder mehr Amidgruppen im Molekül vorhanden sein. Besonders günstig ist die Anwesenheit sowohl von Amid- als auch Carboxylgruppen, wobei die Summe aus Carboxyl- und Amidgruppen im Molekül mindestens 2 betragen muß.

Bei der Komponente A handelt es sich um ein oder mehrere carboxy- und/oder amidgruppenhaltige Polymere, wie vorstehend angegeben. Es kann sich beispielsweise um die nachstehend angegebenen carboxylgruppenhaltigen Monomeren, Oligomeren und/oder Polymeren als solche handeln. Letztere können jedoch auch beispielsweise mit Polyolen, Polyaminen, Aminoalkoholen, Aminocarbonsäuren und/oder Lactamen zu weiteren verwendbaren Polycarbonsäuren auf Ester- bzw. Amid- und/oder Imidbasis usw. umgesetzt werden.

Als Komponente A und/oder zur Herstellung der Komponente A können z.B. carboxylgruppenhaltige Monomere, Oligomere und/oder Polymere der allgemeinen Formel

R - (COOH)ₙ

verwendet werden, wobei n mindestens 2 beträgt und R einen aliphatischen, cycloaliphatischen, aromatischen oder araliphatischen Rest bedeutet, der durch Ester-, Ether- oder bevorzugt Amidgruppen modifiziert sein und in einer weiteren bevorzugten Ausführungsform auch fünf- oder sechsgliedrige heterocyclische, stickstoffhaltige Ringe enthalten kann. Die Carboxylgruppen können teilweise auch durch cyclische Anhydridgruppen substituiert sein, wobei die Summe aus Anhydrid-, Carboxyl- und Amidgruppen mindestens 2 beträgt. Jede Komponente A kann auch aus Mischungen verschiedener carboxyl- und/oder amidgruppenhaltiger Verbindungen bestehen.

Als Komponente(n) A eignen sich beispielsweise auch handelsübliche aromatische, aliphatische oder heterocyclische Polycarbonsäuren mit Molekulargewichten von 200 bis 5000. Bevorzugt verwendet werden jedoch Umsetzungsprodukte aus Polycarbonsäuren und/oder cyclischen Polycarbonsäureanhydriden, die außer der Anhydridgruppe noch mindestens eine weitere Anhydrid- oder Carboxylgruppe aufweisen mit einem Unterschuß an Polyalkoholen, Polyaminen, Aminoalkoholen, Aminocarbonsäuren, Lactamen oder Polyisocyanaten.

Für die Herstellung der Komponente(n) A geeignete Polycarbonsäuren sind aliphatische, cycloaliphatische, heterocyclische, aromatische oder aromatisch-aliphatische Polycarbonsäuren beispielsweise der allgemeinen Formeln 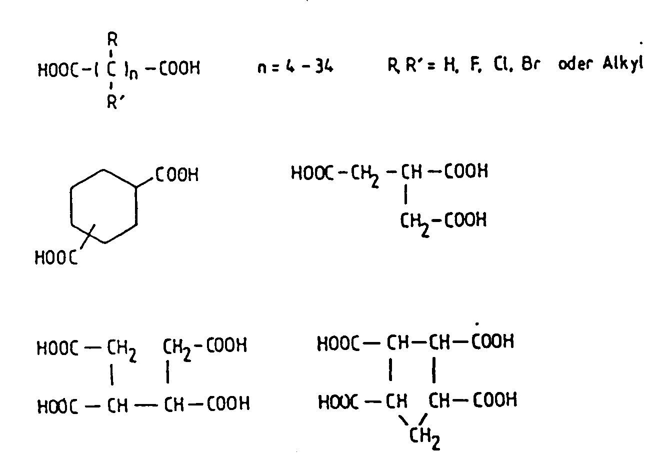 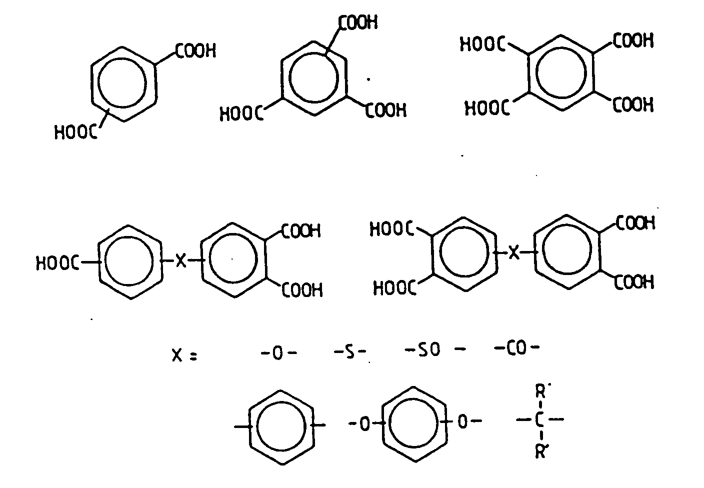 worin R und R' wie vorstehend definiert sind.

Statt der Polycarbonsäuren können auch die entsprechenden Anhydride oder auch zumindest teilweise die entsprechenden Ester verwendet werden. In Betracht kommen beispielsweise Adipinsäure, Azelainsäure, Sebazinsäure, Decandicarbonsäure, Butantetracarbonsäure(anhydrid), Pentantetracarbonsäure(anhydrid), Isophthalsäure, Terephthalsäure, Trimellithsäure(anhydrid), Trimesinsäure, Tris-(2-carboxyethyl)-isocyanurat, Pyromellithsäure(anhydrid), Benzophenontri- und Tetracarbonsäure(anhydrid).

Zur Herstellung der Komponente A geeignete Polyole sind beispielsweise solche mit mindestens zwei aliphatisch gebundenen Hydroxylgruppen, beispielsweise der allgemeinen Formel 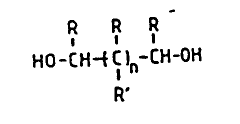 worin n eine ganze Zahl zwischen 0 und 20, R= Wasserstoff oder C₁₋₄ Alkyl und R'= Wasserstoff, -OH, -CH₂OH, -NH₂ oder C₁₋₄ Alkyl bedeutet.

Weitere Beispiele sind Polyalkohole oder allgemeinen Formel 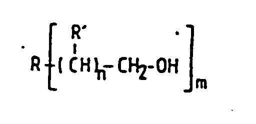 worin n= 0 bis 2, m= 2 bis 4, R ein polyfunktioneller Aryl-, Alkyl-, Cycloalkyl- oder heterocyclischer Rest ist und R'= Wasserstoff oder C₁₋₄ Alkyl bedeuten kann.

Weitere Beispiele sind etherhaltige Polyole der allgemeinen Formel 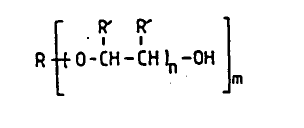 wobei n= 1 bis 10, m= 2 bis 4, R ein polyfunktioneller Aryl-, Alkyl-, Cycloalkyl- oder heterocyclischer Rest ist und R'= Wasserstoff oder C₁₋₄ Alkyl bedeuten kann.

Geeignete Polyole sind z.B. Ethylenglykol, Diethylenglykol, Triethylenglykol und höhere Homologe, Propandiol-(1,2) und -(1,3), Butandiol-(1,4) und -(2,3), Pentandiol-(1,5), Hexandiol-(1,6), Neopentylglykol, 1,4-Bis-hydroxymethyl-cyclohexan, Glycerin, Trimethylolethan, Trimethylolpropan, Tris-(hydroxyethyl)-isocyanurat.

Im allgemeinen werden niedermolekulare Polyole mit 2 bis 4 primären Hydroxylgruppen wie Ethylenglykol, Trimethylolpropan und Tris(hydroxyethyl)-isocyanurat bevorzugt. Es können auch Mischungen verschiedener Polyole eingesetzt werden. So lassen sich z.B. anteilig langkettige aliphatische Diole oder Etherpolyole mit mehr als 10 C-Atomen zur Elastifizierung und Haftungsverbesserung verwenden.

Anstelle der Polyole können auch ganz oder teilweise niedermolekulare Verbindungen eingesetzt werden, die Epoxidringe enthalten und sich mit den Polycarbonsäuren zu Estern umsetzen. Beispielsweise solche der allgemeinen Formel 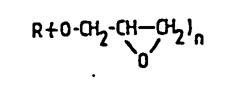 wobei n eine ganze Zahl zwischen 2 und 4 und R einen aliphatischen, cycloaliphatischen, heterocyclischen oder aromatischen Rest bedeutet. Beispiele sind die bekannten Umsetzungsprodukte von Bisphenol A, Bisphenol F oder Novolaken mit Epichlorhydrin.

Zur Herstellung der Komponente A sind beispielsweise für die Umsetzung mit der Polycarbonsäurekomponente geeignete Polyamine aliphatische, cycloaliphatische, heterocyclische, aromatische oder aromatisch-aliphatische Polyamine mit mindestens zwei Aminogruppen im Molekül beispielsweise der allgemeinen Formeln 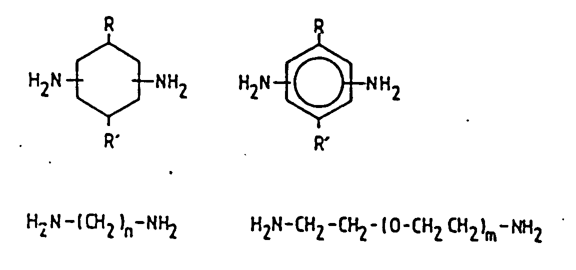 wobei R und R'= Wasserstoff oder C₁₋₈ Alkyl, n eine ganze Zahl zwischen 2 und 20 und m eine ganze Zahl zwischen 1 und 10 bedeutet.

Bevorzugt werden aromatische Mehrkernpolyamine beispielsweise der allgemeinen Formel 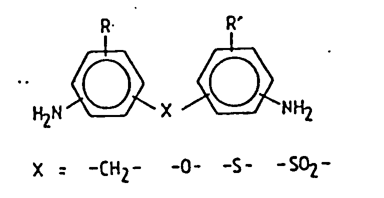 R und R' sind unabhängig H oder C₁₋₈Alkyl

Geeignete Aminoalkohole zur Herstellung der Komponente A sind z.B. solche mit aliphatisch gebundenen Hydroxylgruppen der allgemeinen Formel

(H₂N)ₘ-R-(OH)ₙ

wobei R einen aliphatischen, cycloaliphatischen oder aliphatischaromatischen Rest mit 2-20 C-Atomen darstellt und m= 1 bis 3 sowie n= 1 bis 3 beträgt. Beispiele sind Ethanolamin, Aminopropanol, Aminobutanol und Aminobenzylalkohol.

Für die Herstellung der Komponente A geeignete Aminocarbonsäuren sind beispielsweise solche der allgemeinen Formel

(H₂N)ₘ-R-(COOH)ₙ

wobei R einen aliphatischen, cycloaliphatischen, aromatischen, aromatischaliphatischen oder heterocyclischen Rest mit 2-20 C-Atomen darstellt und m sowie n ganze Zahlen von 1 bis 3 sind. Beispiele sind Aminobenzoesäure, Aminoisophthalsäure und Aminocapronsäure.

Zur Herstellung der Komponente A geeignete Lactame sind z.B. solche der allgemeinen Formel 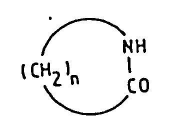 wobei n eine ganze Zahl zwischen 2 und 20 darstellt, beispielsweise Caprolactam.

Zur Herstellung der Komponente A erfindungsgemäß geeignete Polyisocyanate sind beispielsweise aliphatische, cycloaliphatische, aromatische, aromatisch-aliphatische oder heterocyclische Polyisocyanate mit 6 bis 30 C-Atomen und mindestens 2 Isocyanatgruppen im Molekül.

Spezielle Beispiele für Polyisocyanate sind:
4,4'-Diisocyanato-diphenylmethan [MDI]
4,4'-Diisocyanato-diphenylether
4,4'-Diisocyanato-diphenyl-dimethylmethan
2,4- und 2,6-Toluylendiisocyanat [TDI]
1,3- und 1,4-Phenylendiisocyanat
Naphthylendiisocyanat
1,6-Hexamethylendiisocyanat
3-Isocyanatomethyl-3,5,5-trimethyl-cyclohexylisocyanat [IPDI]
2,2,4- und 2,4,4-Trimethyl-hexamethylendiisocyanat
Cyclohexanon-1,3- und -1,4-diisocyanat
1,12-Dodecandiisocyanat.

Bevorzugt werden aromatische Diisocyanate wie 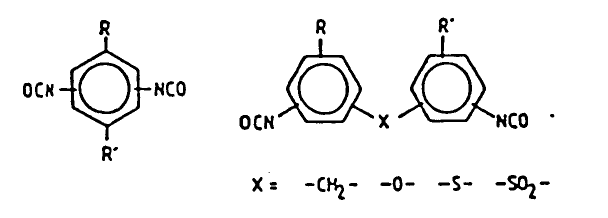 oder ihre dimerisierten und trimerisierten Formen, wobei R und R'= Wasserstoff oder C₁₋₈ Alkyl bedeuten.

In einer bevorzugten Ausführungsform mit besonders guter Wärmebeständigkeit enthalten die carboxylgruppenhaltigen Komponenten A zumindest teilweise heterocyclische, stickstoffhaltige fünf- oder sechsgliedrige Ringe im Molekül. Als heterocyclische Ringe eignen sich z. B. Isocyanuratringe (I) sowie fünfgliedrige Imidringe (II), Hydantoinringe (III) und/oder Lactamringe (IV)

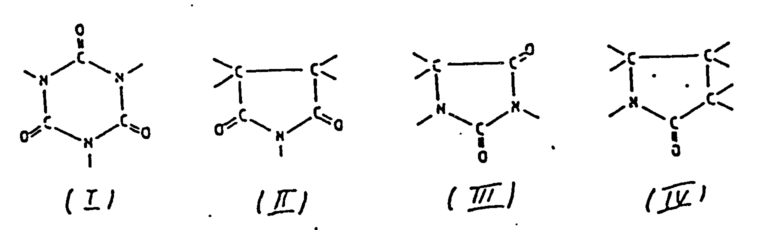

Isocyanuratringe (I) können z. B. über Tris-(2-hydroxyethyl)isocyanurat oder Tris-(2-carboxyethyl)-isocyanurat oder trimerisierte Polyisocyanate einkondensiert werden.

Hydantoinringe (III) enthaltende Verbindungen sind z. B. in der DE-A-1 814 497 und DE-A-2 436 109 beschrieben.

Polycarbonsäuren mit fünfgliedrigen Lactamringen (IV) können durch Umsetzung von Itaconsäure mit aminosubstituierten Verbindungen wie 4,4'-Diaminodiphenylmethan, p-Aminobenzoesäure oder 5-Aminoisophthalsäure erhalten werden.

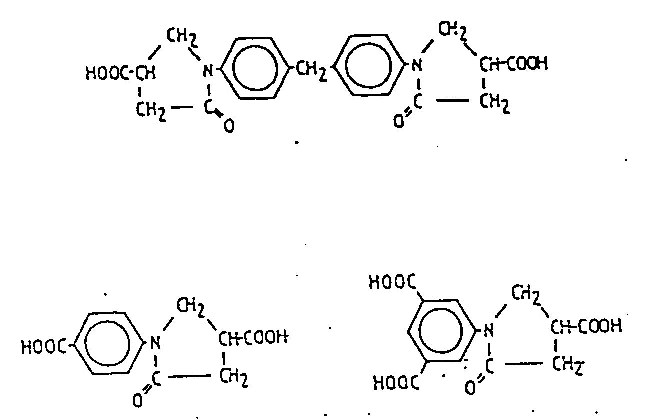

Bevorzugt werden wegen ihrer leichten Zugänglichkeit Imidringe (II). Imidgruppenhaltige Verbindungen können nach bekannten Verfahren z. B. aus cyclischen Carbonsäureanhydriden, die neben der cyclischen Anhydridgruppe noch mindestens eine weitere Anhydrid- oder Carboxylgruppe enthalten, durch Umsetzung mit Aminocarbonsäuren, Polyaminen, Polyisocyanaten, Aminoalkoholen oder Lactamen hergestellt werden (DE-A-1 795 595, DE-A-1 795 596, DE-A-2 659 092). 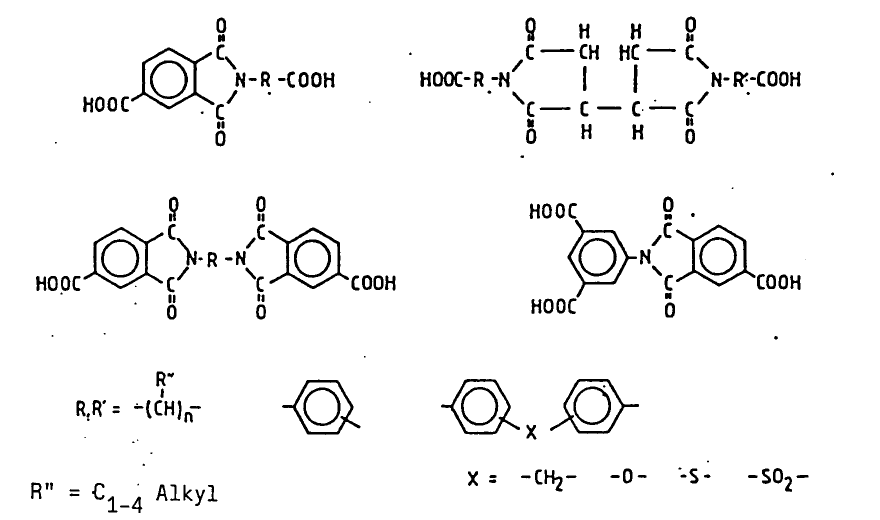 wobei n eine ganze Zahl zwischen 2 und 20 bedeutet.

Besonders bevorzugt wird das Umsetzungsprodukt aus Trimellithsäure(anhydrid) und Diaminodiphenylmethan oder Diaminodiphenylether bzw. dem entsprechenden Diisocyanat.

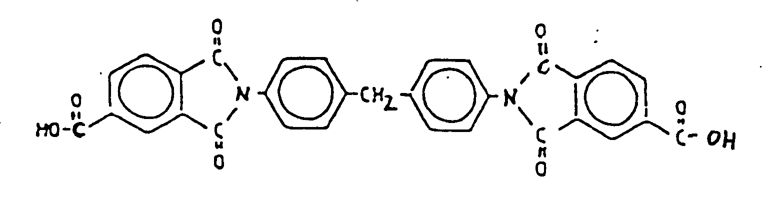

Die Herstellung dieser imidhaltigen Verbindungen kann in bekannter Weise z.B. durch Umsetzung von Trimellithsäure(anhydrid) mit Diaminodiphenylmethan im Molverhältnis 2/1 bis 3/1 erfolgen, z.B. bei 100-200°C in stark polaren Lösungsmitteln wie Kresol oder N-Methylpyrrolidon unter Wasserabspaltung. Die imidhaltige Dicarbonsäure kann anschließend isoliert werden. Bevorzugt wird jedoch ihre Bildung in situ während der Herstellung der Komponente(n) A.

Die Herstellung der Komponente A in Form von ester- und/oder amidhaltigen oligomeren oder polymeren carboxylgruppenhaltigen Verbindungen kann nach bekannten Polykondensationsverfahren durch Umsetzung von Polycarbonsäuren und/oder deren Anhydriden mit einem Unterschuß an Polyolen, Polyaminen und/oder Aminoalkoholen z.B. bei Temperaturen von 100 bis 280°C, bevorzugt 160 bis 250°C unter Wasserabspaltung erfolgen. Die Umsetzung kann in der Schmelze oder auch in inerten Lösungsmitteln durchgeführt werden. Der Fortschritt der Reaktion läßt sich z.B. durch Bestimmung von Säurezahl, Hydroxylzahl und Viskosität leicht verfolgen. Bevorzugt wird die Reaktion bis zum nahezu vollständigen Umsatz durchgeführt. Man kann jedoch auch zunächst die Umsetzung mit einem Unterschuß an Polycarbonsäuren durchführen und dann die restlichen Hydroxylgruppen mit bevorzugt equivalenten Mengen von Polycarbonsäuren oder von Anhydridverbindungen, die außer der Anhydridgruppe noch mindestens eine weitere Anhydrid- oder Carboxylgruppe aufweisen, umsetzen.

Imidgruppenhaltige, zur Ester- und/oder Amidbildung befähigte polyfunktionelle Verbindungen können vorgebildet sein, oder auch bevorzugt während des Kondensationsprozesses in situ z.B. durch Umsetzung von Tri-oder Tetracarbonsäureanhydriden mit Polyaminen, Aminoalkoholen, Aminocarbonsäuren oder Lactamen hergestellt werden. So bildet sich z.B. bei gleichzeitiger Zugabe von Trimellithsäureanhydrid und Diaminodiphenylmethan im Molverhältnis 2/1 bei Temperaturen zwischen beispielsweise 100 und 200°C unter rascher Wasserabspaltung die entsprechende imidhaltige Dicarbonsäure. Das IR-Spektrum zeigt zusätzlich zur Carbonylbande bei 1710-1720 cm⁻¹ die für das cyclische Imid typischen Banden bei 1780 cm⁻¹ und 1380 cm⁻¹.

In bestimmten Fällen kann es zweckmäßig sein, auch anteilig monofunktionelle Carbonsäuren, Anhydride, Alkohole und/oder Amine mitzuverwenden, beispielsweise zur Molekulargewichtsbegrenzung oder Verbesserung der Lackierfähigkeit. Beispiele sind Benzoesäure, Salicylsäure, Maleinsäureanhydrid, Tetrahydrophthalsäureanhydrid, Benzylalkohol, Methyldiglykol sowie aliphatische Monocarbonsäuren, Alkohole und/oder Amine mit 8 - 36 C-Atomen.

Die Mengenverhältnisse der Ausgangsrohstoffe werden derart gewählt, daß bei nahezu vollständigem Umsatz der Carboxylgruppen mit den Hydroxyl- und/oder Aminogruppen das durchschnittliche Zahlenmittel des Molekulargewichts der Komponente(n) A 200 bis 5000, bevorzugt 500 bis 3000 beträgt und pro Mol der Komponente(n) A mindestens 2 Carboxyl- und/oder Amidgruppen vorhanden sind.

Da bei der Polykondensation geringe Wasserreste im Oligomeren bzw. Polymeren zurückbleiben können, werden diese zu Reaktionsende zweckmäßig unter Vakuum oder im Azeotropverfahren entfernt. Als Schleppmittel dienen dabei üblicherweise aromatische Kohlenwasserstoffe wie Toluol oder Xylol.

Eine andere Möglichkeit zur Herstellung von oligomeren oder polymeren Verbindungen der Komponente(n) A ist die Umsetzung von Polycarbonsäuren und/oder ihren Anhydriden mit einem Unterschuß an Polyisocyanaten nach bekannten Verfahren (z.B. DE-A-35 44 548). Dabei entstehen amid- und/oder imidhaltige Verbindungen.

Die Umsetzung der Polycarbonsäuren und/oder Anhydride mit Polyisocyanaten erfolgt z.B. bei ca. 80 bis 200°C unter CO₂-Abspaltung in wasserfreien Lösungsmitteln, die gegenüber der Isocyanatgruppe inert sind wie N-Methylpyrrolidon, Dimethylformamid oder Dimethylacetamid. Der Fortschritt der Umsetzung kann über die abgespaltene CO₂-Menge sowie über die Abnahme der Säurezahl und der Isocyanatbande bei ca. 2260 cm⁻¹ im IR-Spektrum verfolgt werden.

Es kann auch hier zweckmäßig sein, anteilig monofunktionelle Carbonsäuren, Alkohole oder Isocyanate mitzuverwenden. Beispiele sind Benzoesäure, Salicylsäure, Benzylalkohol, aliphatische Monocarbonsäuren, Monoalkohole oder Monoisocyanate mit z.B. 6 bis 36 C-Atomen sowie cyclische Monoanhydride, die keine weitere Carboxyl- oder Anhydridgruppe aufweisen, wie z.B. Maleinsäureanhydrid, Phthalsäureanhydrid oder Tetrahydrophthalsäureanhydrid.

Anstelle der Polycarbonsäuren können teilweise auch Verbindungen mit Glycinestergruppen der allgemeinen Formel

(HOOC)ₙ-R-(NH-CH₂-COOR')ₘ

n = 0 bis 2, m = 1 bis 3, n + m ≧ 2 für die Umsetzung mit den Polyisocyanaten verwendet werden, wobei R bevorzugt einen aromatischen Rest mit 6-18 C-Atomen und R' einen Alkylrest mit 1-4 C-Atomen darstellt. Derartige Verbindungen sind z.B. in der DE-A-18 14 497 beschrieben. Durch Umsetzung mit den Polyisocyanaten entstehen Polyhydantoinstrukturen.

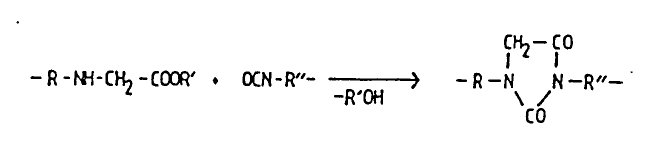

Die Mengenverhältnisse der Polycarbonsäuren und Polyisocyanate werden derart gewählt, daß bei nahezu vollständigem Umsatz der Isocyanatgruppen das durchschnittliche Zahlenmittel des Molekulargewichts zwischen 200 und 5000, bevorzugt zwischen 500 und 3000 liegt und pro Mol der Komponente(n) A mindestens 2 Carboxyl- und/oder Amidgruppen vorhanden sind.

Als Isocyanatkomponente(n) B mit mindestens zwei freien Isocyanatgruppen kommen aliphatische, cycloaliphatische, araliphatische, aromatische und heterocyclische Polyisocyanate mit Molekulargewichten zwischen 200 und 3000, bevorzugt 250 - 1500 in Betracht, beispielsweise:
4,4'-Diisocyanatodiphenylmethan
2,4'-Diisocyanatodiphenylmethan
4,4'-Diisocyanatodiphenylmethan
1-Isocyanato-3,3,5-trimethyl-5-isocyantomethyl-cyclohexan
2,2,4- und 2,4,4-Trimethylhexamethylendiisocyanat.

Weiterhin kommen Polyisocyanate in Betracht, wie sie z. B. in Houben-Weyl, Band 14/2, S. 64-70 beschrieben sind:
- Umsetzungsprodukte der Polyisocyanate mit einem Unterschuß an Polyalkoholen
- Trimerisierungsprodukte der Isocyanate
- carbodiimidhaltige Polyisocyanate
- Umsetzungsprodukte mit Biuretstruktur
- uretdionhaltige Polyisocyanate
- Polyisocyanate mit Amid- oder Imidstrukturen, die z. B. durch Umsetzung von Polycarbonsäuren und/oder Polycarbonsäureanhydriden mit einem Überschuß Polyisocyanat erhalten werden.

Es können auch Mischungen verschiedener Polyisocyanate zur Erzielung bestimmter Eigenschaften verwendet werden.

Übliche Lackadditive können den Komponenten A und/oder B in üblicher Weise zugesetzt werden. Um das Auftragsverfahren variabler zu gestalten, können sie aber auch als gesonderte Komponenten C unmittelbar vor dem Auftrag zudosiert werden. Beispiele sind wasserfreie flüssige Verbindungen, Lösungen oder Dispersionen von Verlaufsmitteln, Gleitmitteln, Farbstoffen, Kombinationsharzen und Katalysatoren.

### Gleitmittel als Komponente C

Die erfindungsgemäße Mehrkomponenten-Technik eignet sich auch hervorragend zur Einarbeitung von sogenannten "inneren" Gleitmitteln in Lacke.

Gleitmittel sollen die Verarbeitbarkeit der mit einem isolierenden Überzug versehenen Wickeldrähte verbessern (vergl. DE-A- 32 37 022, EP-A- 00 72 178, EP-A- 01 03 307, EP-A- 02 67 736). Bei der üblichen Applikation sogenannter "äußerer Gleitmittel" beispielsweise in Form 0,5 bis 2%iger Lösungen von Paraffinen oder Wachsen in leicht flüchtigen organischen Lösungsmitteln auf den isolierten Wickeldraht verdunsten die Lösungsmittel und werden an die Umwelt abgegeben oder verbrannt. Die verwendeten Lösungsmittel können Oberflächenrisse im Lack verursachen.

Diese und andere Nachteile entfallen bei der bekannten Verwendung sog. "innerer" Gleitmittel, die dem Lack direkt beigemischt werden. Beispiele sind Polyethylen, Polypropylen, Polytetrafluorethylen, Silikonöle, Paraffine sowie oligomere bzw. polymere Ester oder Amide auf Basis langkettiger aliphatischer Fettsäuren, Fettalkohole, Polyethylenglykole, Polypropylenglykole oder Fettamine. Die Gleitmittel wandern bei der Aushärtung des Lackfilms durch ihre zumindest teilweise Unverträglichkeit in der Regel zur Filmoberfläche und bilden dort eine Schicht mit verbesserter Gleitfähigkeit. Viele dieser Zusätze sind jedoch auch mit dem flüssigen Lack unverträglich und führen zu Lagerinstabilitäten durch Agglomeration oder Entmischung.

Bei der erfindungsgemäßen Mehrkomponenten-Technik können derartige Gleitmittelzusätze - sofern sie stabile Mischungen ergeben - in den Komponenten A und/oder B enthalten sein. Treten jedoch Unverträglichkeiten oder unerwünschte Reaktionen auf, ist es günstiger, diese Zusätze in Form von (nichtwäßrigen) gegenüber Isocyanaten inerten Lösungen, Emulsionen oder Dispersionen als gesonderte Komponente C erst unmittelbar vor der Verarbeitung mit den Komponenten A und B zu mischen. In Verbindung mit einem Mehrschichtenaufbau kann es vorteilhaft sein, nur den äußersten Lackauftrag mit dem inneren Gleitmittel zu versehen. Dadurch werden eventuelle Nachteile in Bezug auf thermische, chemische oder mechanische Eigenschaften auf die äußerste Lackschicht beschränkt.

Zur Lackierung verschiedener Drahtdimensionen werden in der Regel Lackmischungen mit unterschiedlichen Feststoffgehalten und Viskositäten benötigt. Durch Zumischung der entsprechenden Lösungsmittelmenge als Komponente C unmittelbar vor der Verarbeitung lassen sich die erforderlichen Einstellungen auf einfache Weise durchführen.

Durch das besondere Auftragsverfahren ist die Verweilzeit der Lackmischung nach der Homogenisierung nur kurz. Die engen Transportleitungen bewirken hohe Strömungsgeschwindigkeiten und Turbulenzen. Daher können sogar Verschnittmittel, nämlich Lösungsmittel verwendet werden, die mit den einzelnen Komponenten ganz oder teilweise unverträglich sind und bei längerer Lagerung zu Entmischung führen würden.

Beispielsweise sind aromatische Kohlenwasserstoffe wie Xylol, Solvesso 100® oder Solvesso 150® meist Nichtlöser, in begrenzten Mengen jedoch preiswerte Verschnittmittel. In der Regel bewirken sie eine starke Viskositätsreduzierung, führen bei an sich erwünschten höheren Konzentrationen im Lack jedoch zu Lagerinstabilität und Entmischung. Derartige Verschnittmittel können bei dem erfindungsgemäßen Verfahren vorteilhaft als Komponente(n) C in vergleichsweise hoher Konzentration zugemischt werden.

Die Komponenten der erfindungsgemäß eingesetzten Mehrkomponentenüberzugsmittel können in lösungsmittelhaltiger oder auch in lösungsmittelfreier Form vorliegen. Werden Lösungsmittel verwendet, so dürfen sie bei Einsatz in Komponente B keine isocyanatreaktiven Gruppen enthalten. Die Lösungsmittel dienen vor allem der Verlaufsverbesserung und haben beispielsweise Siedepunkte von etwa 100 bis 250°C, bevorzugt 140-210°C. Die Konzentration wird möglichst gering gehalten und kann durch Erwärmen der Komponenten auf Temperaturen bis etwa ca. 50°C weiter reduziert werden. In der Regel sind maximal 10 bis 60 Gew.% Lösungsmittel ausreichend.

Als Lösungs- und Verlaufsmittel kommen z.B. in Betracht:
- N-Methylpyrrolidon, Dimethylformamid, Dimethylacetamid, Butyrolacton,
- Glykolester wie Methoxypropylacetat, Ethoxypropylacetat, Butylglykolacetat, Propylenglykoldiacetat
- Glykolether wie Dimethyldiglykolether, Methylglykol-tert.-butyl-ether, Ethylglykol-tert.-butylether, Butylglykol-tert.-butyl-ether, Methyldiglykol-tert.-butylether
- aromatische Kohlenwasserstoffe wie Toluol, Xylol, Solvesso 1oo®, Solvesso 150®
- Ketone wie Cyclohexanon, Methylisobutylketon, Methylisoamylketon

Als Reaktivverdünner können den isocyanatfreien Komponenten A oder C auch flüssige, hydroxyl-, amino- oder carboxylgruppenhaltige Verbindungen zugesetzt werden. Beispiele sind Ethylenglykol, Propylenglykol, Diethanolamin, Triethanolamin, höhermolekulare Polyethylenglykole und Propylenglykole. Weiterhin können die Komponenten A und C auch solche Lösungsmittel enthalten, die mit Komponente B reversibel reagieren können, wie z. B. Acetylaceton oder Acetessigester. Ein Zusatz derartiger Lösungsmittel kann gegebenenfalls zur Steuerung der Reaktionsgeschwindigkeit dienen.

Beim erfindungsgemäßen Verfahren werden die Komponenten A, B und gegebenenfalls C kontinuierlich unmittelbar vor der Verarbeitung in einem Verhältnis gemischt, daß auf jede Carboxylgruppe 0,5 - 5,0 Isocyanatgruppen entfallen, bevorzugt 0,8 - 2,0 und auf jede Amidgruppe 0,02 - 2,0, bevorzugt 0,1 - 1,0 Isocyanatgruppen entfallen. Das optimale Vernetzungsverhältnis wird zweckmäßig durch praktische Versuche ermittelt. Durch Änderung des Vernetzungsverhältnisses lassen sich die Eigenschaften der isolierenden Überzüge variieren.

Die Überzugsmittel- bzw. Lackmischung kann zusätzlich Katalysatoren, verlaufsfördernde Mittel, Stabilisatoren zur Regelung der Gelzeit und Kombinationsharze wie Phenolharze, Melaminharze, Epoxidharze enthalten. Derartige Zusätze sind bevorzugt der Komponente A oder C beigemischt.

Die Vernetzungsgeschwindigkeit kann durch Zugabe der bekannten Katalysatoren für die Isocyanatreaktionen gesteigert werden. Dadurch wird eine weitere Reduzierung der Ofentemperatur bzw. Erhöhung der Lackiergeschwindigkeit ermöglicht.

Geeignete Katalysatoren sind z. B. organische Metallverbindungen des Bleis, Zinns und Zinks, wie Tetraphenylblei, Tetraethylblei, Hexaphenyldizinn, Hexa-n-butyldizinn und Zinkoctoat, Titanverbindungen wie Tetrabutyltitanat, Titanacetylacetonat, Diethanolamintitanat, Triethanolamintitanat.

Die Katalysatoren werden z.B. in einer Menge zwischen 0,1 bis 5,0 %, vorzugsweise 0,3 bis 1,0 Gew.%, bezogen auf die Gesamtmenge der Komponenten A und B eingesetzt. Sie werden bevorzugt der Komponente A oder C zugesetzt. Höhere Zusätze bewirken im allgemeinen keine Vorteile.

Bei dem erfindungsgemäßen Verfahren erfolgt die Mischung der Komponenten kontinuierlich und unmittelbar vor dem Aufbringen auf den elektrischen Leiter. Jedem einzelnen Leiter, z. B. Draht, wird dabei in einer Zeiteinheit nur die Lackmenge zugeführt, die auch verbraucht wird. Dabei wird bevorzugt so gearbeitet, daß das Mischen der Einzelkomponenten A, B und gegebenenfalls C sowie gegebenenfalls weiterer Lackkomponenten unmittelbar vor der Applikation und nur in solchen Mengen erfolgt, die der zu applizierenden Menge angepaßt sind.

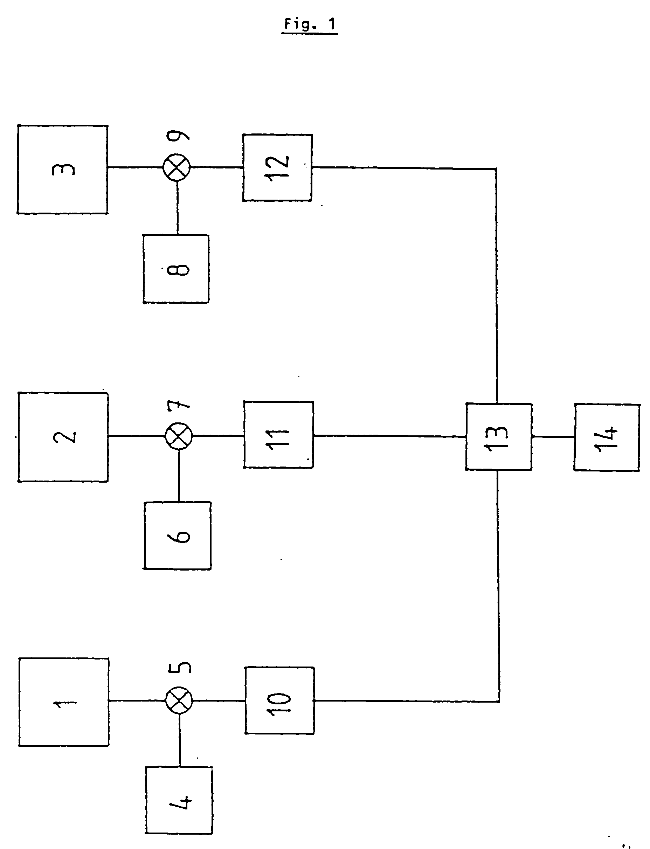

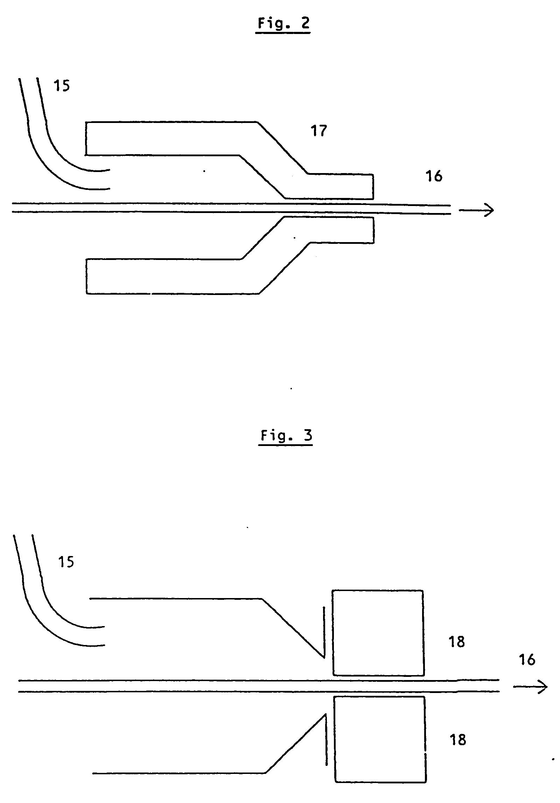

Zur Herstellung der Mischung eignen sich übliche Mehrkomponten-Verarbeitungsanlagen, wie sie beispielsweise schematisch in der Figur 1 dargestellt sind.

In dem in der Figur 1 dargestellten Beispiel bedeutet 1 den Vorratsbehälter für die Komponente A, 2 den Vorratsbehälter für die Komponente B und 3 den Vorratsbehälter für die Komponente C. 4, 6 und 8 sind Vorratsbehälter für Spülverdünnungen für die Komponenten A, B und C. 5, 7 und 9 sind Hähne, zum Beispiel 3-Wege-Hähne. 10, 11 und 12 sind einzeln regelbare Pumpen, zum Beispiel Zahnradpumpen. 13 stellt eine Mischvorrichtung dar und 14 einen Lackverteiler, mit Auftragsvorrichtung.

Mit einer solchen Vorrichtung lassen sich die Komponenten A, B und C und gegebenenfalls weitere Lackadditive kontinuierlich unmittelbar vor dem Aufbringen auf den Draht in definierten Verhältnissen mischen. Die Lackmischung wird jeder Auftragsvorrichtung gesondert und in einer dem Verbrauch entsprechenden Menge zugeführt. Der Transportweg von der Mischvorrichtung zur Auftragsvorrichtung wird dabei kurz gehalten.

Zur Herstellung der Lackmischung eignen sich handelsübliche Zwei- und Mehrkomponenten-Verarbeitungsanlagen, z.B. Eldo-Mix der Firma Hilger + Kern. Die Komponenten werden aus ihren Vorratsbehältern jeweils getrennt zur Mischvorrichtung gefördert und dort intensiv vermischt.

Die Pumpen können dabei kontinuierlich (Zahnradpumpen) oder diskontinuierlich (Kolbenpumpen) wirken. Die Fördermenge jeder Pumpe pro Zeiteinheit ist über Motordrehzahl und Übersetzung variabel einstellbar. Damit lassen sich Mischungsverhältnis sowie die pro Zeiteinheit zur Auftragsvorrichtung geförderte Lackmenge genau festlegen. Die Einstellung wird derart vorgenommen, daß die Fördermenge dem Lackverbrauch an den Auftragsvorrichtungen entspricht.

Durch Änderung der Motorendrehzahl der Pumpen läßt sich das Mischungsverhältnis der Lackkomponenten variieren und gegebenenfalls unterschiedlichen Anforderungen anpassen. Ein Wechsel der Vorratsbehälter der Komponenten A, B oder C erlaubt eine rasche Umstellung der Lackmischung auf eine neue Qualitätsvariante.

Bei Bedarf kann die Zufuhr der Komponenten A, B und C vor den Pumpen mittels Hähnen gesperrt und auf die Förderung von Spülverdünnung aus den separaten Behältern umgestellt werden. Dies ist z.B. bei Unterbrechung oder Beendigung des Lackiervorgangs erforderlich. Als Spülverdünnung werden z.B. inerte, mit den Komponenten A, B und C verträgliche Lösungsmittel verwendet, wie sie z.B. vorstehend beschrieben sind. Sie kann z.B. auch monofunktionelle Alkohole, wie Methyldiglykol, enthalten.

Die Mischung der Komponenten in der Mischvorrichtung kann mechanisch oder statisch erfolgen. Bewährt haben sich z.B. handelsübliche statische Mischrohre, die durch Stromteilung und Radialmischung eine einwandfreie Homogenisierung bewirken.

Der Mischvorrichtung schließt sich ein Lackverteiler an. Der homogenisierte Lack wird hier für die Förderung zu den einzelnen Auftragsvorrichtungen aufgeteilt. Der Weg zwischen Mischvorrichtung und Auftragsvorrichtung wird dabei kurz gehalten.

Der Lackverteiler kann z.B. aus einem kurzen Rohrstück bestehen, in das biegsame Kapillarrohre, z.B. aus Edelstahl, eingefügt sind. Die Verwendung von Kapillarrohren erlaubt eine flexible und gezielte Lackzuführung zu den Auftragsvorrichtungen. Ein solcher Lackverteiler ist beispielsweise in der DE-A- 40 23 061 beschrieben.

Als Kapillaren, Kapillarrohre oder kapillarartige Bohrungen werden hier Rohre bzw. rohrähnliche Materialien, insbesondere Metallrohre, mit einem Innendurchmesser von 0,1 bis 2,0 mm bezeichnet. Der Innendurchmesser wird hierbei hauptsächlich von der Ausflußrate (etwa 0,2 bis 10 ml/min) und der Lackviskosität bestimmt. Die Länge der Rohre wird von den örtlichen Maschinenverhältnissen bestimmt; sie beträgt beispielsweise 1-100 cm. Den Kapillaren ähnliche Vorrichtungen können auch mit gebohrten Metall- oder Kunststoffkörpern realisiert werden. Der Effekt solcher Einrichtungen beruht darauf, daß damit relativ hohe Strömungsgeschwindigkeiten (1-100 cm/sec) für kleine Flüssigkeitsmengen erreicht werden. Damit kann gesichert werden, daß die gemischten Komponenten nicht im Fördersystem reagieren und damit ein Verstopfen vermieden werden kann. Die Anzahl der Kapillaren oder Bohrungen wird von der Anzahl der zu beschichtenden Drähte (Drahtdurchzüge) bestimmt.

Ein Beispiel für eine geeignete Vorrichtung arbeitet z.B. mit folgenden Kennwerten für die Kapillaren bzw. kapillarartigen Bohrungen:
- Innendurchmesser 0,05 cm
- Länge 40 cm
- Anzahl 7 Stück
- Ausflußrate 0,2 - 5 ml/min
- Strömungsgeschwindigkeit 1,7 - 42 cm/sec.

Die Länge der Kapillaren kann variabel und den Erfordernissen angepaßt sein. Unter der Bezeichnung "Lackverteiler und Kapillaren" wird z.B. auch ein Rohrstück verstanden, das mit engen, kapillarartigen Bohrungen versehen und direkt über der Auftragsvorrichtung bzw. den Auftragsvorrichtungen angebracht ist.

Zwischen Lackverteiler und Auftragsvorrichtung können zusätzlich mechanisch oder elektromagnetisch regulierbare Absperrventile angebracht werden, um den Lackzufluß genau dem Verbrauch jeder einzelnen Auftragsvorrichtung anzupassen. Weiterhin kann bei hochviskosen Lackmischungen die Viskosität mittels einer Heizvorrichtung für die Kapillarrohre gesenkt werden. Der geringe Leitungsdurchmesser erlaubt eine gute Wärmeübertragung.

Mittels der Auftragsvorrichtung wird der Lack in einer genau definierten Menge zentrisch auf den Draht aufgetragen. Als Auftragsvorrichtung können z.B. die dem Stand der Technik entsprechenden Düsen- oder Filzabstreifer verwendet werden, (von denen Beispiele in den Figuren 2 und 3 dargestellt sind. In den Figuren 2 und 3 sind Beispiele für Auftragsvorrichtungen dargestellt, wie sie erfindungsgemäß benutzt werden können. In den Figuren 2 und 3 bedeuten 15 das Kapillarrohr, 16 den zu beschichtenden Draht, 17 einen Düsenabstreifer und 18 einen Quetschfilz). Bei der Verwendung von Quetschfilzen wird vor dem Durchzug durch den Filzabstreifer zweckmäßig ein konischer Trichter angebracht, der die geförderte Lackmenge aufnimmt.

In der Regel werden mehrere Auftragsvorrichtungen verwendet, um den isolierenden Lack in mehreren Schichten aufzutragen, bis die gewünschte Lackzunahme erreicht ist. Jede Lackschicht wird vor dem nächsten Auftrag in einem Trockenofen bei einer Temperatur von ca. 250 bis 500°C gehärtet. Der Einbrenngrad wird dabei durch Abziehgeschwindigkeit und Ofentemperatur geregelt.

Bei jedem Lackauftrag wird die Schichtstärke beispielsweise durch Düsenabstreifer (Figur 2) oder Quetschfilz (Figur 3) eingestellt. Der Lack wird bevorzugt über Kapillarrohre direkt in eine z.B. trichterförmige Öffnung an der Auftragsvorrichtung transportiert und zwar in einer Menge, die genau dem Verbrauch entspricht, so daß der Trichter stets gefüllt ist, jedoch nicht überläuft. Der Lack kann auch vor der Auftragsvorrichtung direkt auf den Draht aufgeträufelt werden und wird dann von diesem weitertransportiert.

Bei Verwendung mehrerer Mischvorrichtungen und dabei unterschiedlichen Mischungsverhältnissen oder unterschiedlicher Zusammensetzung der Komponenten A, B und C lassen sich auch Mehrschichtaufbauten mit breitem Eigenschaftsspektrum erzeugen.

Die Lackschicht wird überlicherweise bevorzugt durch kontinuierliches Aufbringen und Aushärten von 3 bis 20 Einzelschichten erzeugt. Die Einzelschichten können dabei aus unterschiedlichen Stoffsystemen bestehen und teilweise auch in konventioneller Technik im Einzelschacht- oder Tandemverfahren aufgebracht werden.

Beispielsweise kann eine in erfindungsgemäßer Mehrkomponenten-Technik auf dem elektrischen Leiter hergestellte Lackschicht mit einem Überzug aus Nylon in konventioneller Technik versehen werden. Ebenfalls möglich ist z.B. das Aufbringen eines gleitmittelhaltigen Überzugs als äußerste Überzugsschicht in Mehrkomponenten-Technik.

Die Erfindung betrifft auch eine neue Auftrags- bzw. Applikationsvorrichtung zum Auftrag von Mehrkomponenten-Überzugsmitteln auf Drähte oder drahtförmige Gebilde, wie Fasern. Eine derartige Auftragsvorrichtung ist zum Auftrag von Mehrkomponenten-Überzugsmitteln geeignet, die in einer Mischvorrichtung unmittelbar vor der Auftragsvorrichtung gemischt wurden. Die neue Auftragsvorrichtung ist daher besonders zur Durchführung des erfindungsgemäßen Verfahrens geeignet.

Bei der erfindungsgemäßen Auftragsvorrichtung gelangt der von einer Mischungsvorrichtung (im Beispiel der Figur 1 Bezifferung 13) zugeführte Lack zunächst in einen Vorratsbehälter (Gefäß bzw. Becken). In diesem Behälter wird die Füllhöhe überwacht und auf annähernd konstantem Niveau gehalten. Die Überwachung kann beispielsweise durch optische oder akustische Verfahren erfolgen. Das Halten auf annähernd konstantem Niveau wird insbesondere durch eine Steuerung der Zuführung der Einzelkomponenten zur Mischvorrichtung und/oder durch Steuerung der Zufuhr von der Mischvorrichtung zum Vorratsbehälter erfolgen. Diese Steuerung kann beispielsweise durch elektrische Signale bewirkt werden, die auf Punkten zur Zuführung der Einzelkomponenten in die Mischvorrichtung einwirken. In der im Beispiel der Figur 1 dargestellten Ausführungsform können auf diese Weise die Pumpen 10, 11 und 12 betätigt werden. Der Lack wird dann auf beliebige Weise dem zu beschichtenden Draht oder faserförmigen Gebilde zugeführt, beispielsweise durch kapillarartige Leitungen oder Bohrungen. Der Draht kann waagerecht oder senkrecht laufen, die Zuführung wird jeweils entsprechend angepaßt. Gemäß einer bevorzugten Ausführungsform kann überschüssiger Lack von den Drähten in den Vorratsbehälter zurückfließen. Die Menge in dem Vorratsbehälter wird so klein wie möglich gehalten und der direkt verbrauchten Menge angepaßt. In der Praxis liegen die Mengen im Vorratsgefäß in der Größenordnung von wenigen Millilitern, zum Beispiel von 1 bis 100 Milliliter.

Die Erfindung betrifft auch eine Vorrichtung zur Herstellung von Überzügen aus flüssigen Mehrkomponenten-Überzugsmitteln auf Drähten oder faserartigen Materialien mit einem Vorratsbehälter für Mehrkomponenten-Überzugsmittel und Einrichtungen zum Kontakt der Drähte oder faserartigen Materialien mit dem Mehrkomponenten-Überzugsmittel aus dem Vorratsbehälter, mit einer Zuführungsleitung für das Mehrkomponenten-Überzugsmittel, die den Vorratsbehälter unmittelbar mit einer Einrichtung zum Mischen des Mehrkomponenten-Überzugsmittels aus dessen Einzelkomponenten verbindet, wobei der Vorratsbehälter so bemessen ist, daß bei kontinuierlicher Beschichtung die Verweilszeit des Mehrkomponenten-Überzugsmittels so kurz ist, daß seine Aushärtung im Vorratsbehälter vermieden wird, und wobei der Vorratsbehälter Einrichtungen zur Steuerung der Fördermenge des Mehrkomponenten-Überzugsmittels aus der Mischeinrichtung und/oder zur Förderung der Einzelkomponenten des Mehrkomponenten-Überzugsmittels in die Mischeinrichtung in Abhängigkeit von der Füllstandshöhe im Vorratsbehälter aufweist.

Gemäß einer bevorzugten Ausführungsform wird bei der erfindungsgemäßen Auftragsvorrichtung nach dem Auftrag des Mehrkomponenten-Überzugsmittels der Draht oder die Faser durch eine Abstreifvorrichtung transportiert, die bevorzugt trichterförmig ausgebildet ist, wobei der Draht bzw. die Faser in die weite Öffnung des Trichters eingeführt wird. Der Abstreifer ist so ausgebildet, daß der Draht waagrecht durch die Abstreifvorrichtung gezogen wird. Von unten, seitlich oder von oben her wird durch eine enge Bohrung oder Kapillare dem Draht das Überzugsmittel vor der Abstreifvorrichtung zugeführt. Überschüssiger Lack fließt aus der Abstreifvorrichtung, insbesondere aus der trichterförmigen Weitung, in ein unter der Abstreifvorrichtung befindliches Vorratsgefäß. Dieses Vorratsgefäß wird mit frischem Überzugsmittel bespeist (dieses kann beispielsweise aus einer Mischvorrichtung für mehrkomponentige Systeme zugeführt werden). Aus dem Vorratsgefäß wird der Lack mittels einer Pumpe in die enge Bohrung bzw. Kapillare eingeführt.

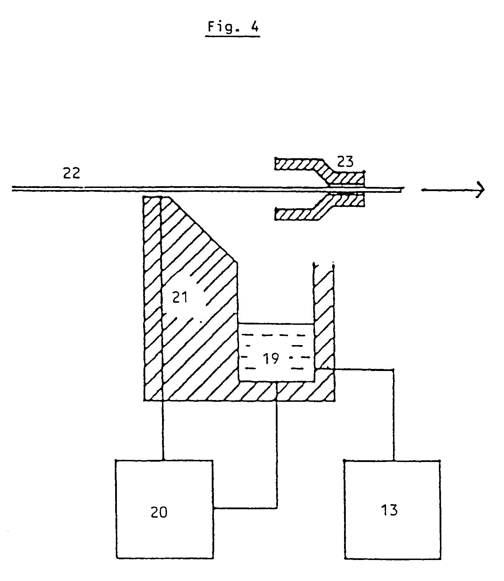

Ein Beispiel für eine bevorzugte Ausführungsform der erfindungsgemäßen Vorrichtung wird in der Figur 4 dargestellt. In der Figur 4 wird aus einer Mischvorrichtung 13 homogenisierter Lack in ein Vorratsgefäß 19 gepumpt. Die darin befindliche Lackmenge wird klein und durch Regelung des Lackzuflusses auf annähernd gleichem Niveau gehalten. Mittels einer Pumpe 20 wird der Lack über eine enge Bohrung oder Kapillare 21 dem zu beschichtenden Draht (oder der zu beschichtenden Faser) 22 zugeführt und von diesem zur Abstreifvorrichtung 23 transportiert. Dort wird der überschüssige Lack abgestreift und fließt zurück in das Vorratsgefäß 19. Der Boden des Vorratsgefäßes 19 ist vorzugsweise so abgeschrägt, daß der Lack zur Zuflußleitung für die Pumpe 20 abfließt.

Die erfindungsgemäße Vorrichtung wird mit engen Leitungsquerschnitten bereitgestellt, die hohe Strömungsgeschwindigkeiten ergeben. Hierdurch werden die Verweilzeiten kurz gehalten. Um den Lackfilm in mehreren Einzelschichten zu erzeugen, können entsprechend viele Kapillaren oder Bohrungen nebeneinander angeordnet sein.

Die durch enge Leitungsquerschnitte erzeugte turbulente Strömung verhindert in Verbindung mit den kurzen Verweilzeiten auch ein Entmischen von schlecht- oder nichtverträglichen Lackkomponenten. Dadurch wird die Möglichkeit der Rohstoffauswahl wesentlich erweitert, da man bei der Lackformulierung nicht auf hohe Lagerstabilität der Lacke achten muß.

Durch das erfindungsmäße Verfahren und die erfindungsgemäße Vorrichtung wird es möglich, Drähte und faserartige Materialien, wie verschiedene Fasern, z.B. Glasfasern, Kohlenstoff-Fasern, Kunststoff-Fasern, in einfacher Weise mit gleichmäßigen Beschichtungen zu versehen, wobei die Abspaltung unerwünschter Nebenprodukte und die Emission von Lösungsmitteln ausgeschlossen und zumindest sehr gering gehalten werden kann. Elektrisch leitfähige Drähte können erfindungsgemäß mit Isolierschichten versehen werden. Andere Drähte oder Fasern, wie Glasfasern, können beispielsweise zum Schutz gegen mechanische Beschädigung, zum Schutz vor Korrosion oder zum Schutz gegen Hydrolyse überzogen werden.

Anhand des nachfolgenden Beispiels wird die Erfindung weiter erläutert. Teile (Tl) und Prozentangaben beziehen sich, sofern nicht anders angegeben, auf das Gewicht.

Das folgende Beispiel beschreibt die Herstellung eines aromatischaliphatischen Polyamids und seine Anwendung als Backlack.

### Beispiel 1:

### Komponente A

In einem 2-l-Dreihalskolben, der mit Rührer, Heizvorrichtung, Rückflußkühlung und Stickstoffeinleitung versehen ist, werden 488 g N-Methylpyrrolidon, 209 g Xylol, 173 g Decandicarbonsäure, 51 g Sebacinsäure und 90 g Terephthalsäure unter Rühren auf 60°C erwärmt. Dann werden 170 g einer 80/20-Mischung aus 2.4- und 2.6-Toluylendiisocyanat sowie 100 g 4,4'-Diisocyanatodiphenylmethan zugesetzt. Das Reaktionsgut wird nun auf 100°C geheizt und 2 Stunden gerührt. Dann wird 10 Stunden bei 130°C und 3 Stunden bei 150°C gerührt.Im IR-Spektrum ist die für Isocyanat typische Bande bei ca. 2260 cm⁻¹ nicht mehr zu sehen.

Der Feststoffgehalt der Lösung beträgt 41,5 % (2 Stunden bei 180°C) und die Viskosität 1600 mPas/25°C. Die Lösung ist > 8 Monate lagerstabil.

### Komponente B

Als Polyisocyanatkomponente B wird ein handelsübliches, flüssiges Gemisch aus 4,4'- und 2,4'-Diisocyanatodiphenylmethan verwendet (Basonat ADS 3374®; BASF).

Beide Komponenten werden für sich getrennt kontinuierlich über elektronisch geregelte Präzisions-Zahnrad-Dosierpumpen zu einem Mischblock mit statischem Mischrohr geführt. Das Mischungsverhältnis (Gew.Tl.) beträgt 32/1; die Mischung besitzt eine Viskosität von 1550 mPas.

Der Weitertransport zu den Abstreifdüsen erfolgt über 4 Kapillarrohre mit je 40 cm Länge und 0,05 cm Innendurchmesser. Die Fördergeschwindigkeit der Lackmischung wird über die Pumpendrehzahl derart eingeregelt, daß keine Abstropfverluste entstehen.

Der Lack wird mittels Düsen in 4 Durchzügen auf einen Kupferdraht von 0,315 mm Durchmesser, der mit einem handelsüblichen THEIC-Esterimid-Drahtlack vorbeschichtet ist und einen Gesamtdurchmesser von 0,350 mm besitzt, aufgetragen und in einem Horizontalofen von 2,4 m Länge bei einer Umlufttemperatur von 420°C gehärtet. Die Prüfwerte sind in Tabelle 1 aufgeführt.

In einem weiteren Versuch wird das Mischungsverhältnis der Komponenten A/B auf 26,7/1 eingeregelt. Die Prüfergebnisse sind ebenfalls in Tabelle 1 aufgeführt.

### Vergleichsversuch A

In diesem Vergleichsversuch wird ein aromatisch-aliphatisches Polyamid wie in US-A- 4 501 883 (Beispiel 2) beschrieben hergestellt.

In einem 2-l-Dreihalskolben, der mit Rührer, Heizvorrichtung, Rückflußkühlung und Stickstoffeinleitung versehen ist, werden 608 g N-Methylpyrrolidon, 151 g einer 80/20-Mischung aus 2,4- und 2,6-Toluylendiisocyanat sowie 93 g 4,4'-Diisocyanatodiphenylmethan und danach 185 g Decandicarbonsäure sowie 72 g Terephthalsäure unter Rühren bei Raumtemperatur eingefüllt. Dann wird langsam auf 75°C und anschließend in 4 Stunden auf 175°C geheizt. Danach wird noch 4 Stunden bei 170-175°C gerührt. Die Lösung besitzt einen Feststoffgehalt von 40,3% (eine Stunde 180°C); sie ist nach 1 Monat eingedickt.

Ein Teil der Lösung wurde mit N-Methylpyrrolidon verdünnt auf 29,1% (1 Stunde bei 180°C) bei einer Viskosität von 1200 mPas. Die Lösung ist 3 bis 4 Monate lagerstabil.

Die verdünnte Lösung wurde in konventioneller Auftragsweise mittels Düsen in 4 Durchzügen wie in Beispiel 1 auf einen Kupferdraht von 0,315 mm Durchmesser, der mit einem handelsüblichen THEIC-Esterimid-Drahtlack vorbeschichtet ist und einen Gesamtdurchmesser von 0,350 mm besitzt, aufgetragen und gehärtet. Die Prüfwerte sind in Tabelle 1 aufgeführt. Die Prüfungen am Lackdraht wurden nach DIN 46453 Teil 1 durchgeführt.

**Tabelle 1**

| | Vergleichsversuch A | Beispiel 1 | | | | | |
|---|---|---|---|---|---|---|---|
| Mischungsverhältnis Gew. TLA/Gew. TL B | - | 32/1 | | | 26,7/1 | | |
| Feststoffgehalt % | 29,1 | 41,5 | | | 41,6 | | |
| Viskosität (25°C) mPa.s | 1200 | 1550 | | | 1590 | | |
| Viskosität nach 5 Stunden mPa.s | | 1820 | | | 1860 | | |
| Lackiergeschwindigkeit m/min | 50 | 40 | 50 | 60 | 40 | 50 | 60 |
| Oberfläche | i.O. | i.O. | i.O. | i.O. | i.O. | i.O. | i.O. |
| Prüfungen am Lackdraht Erweichungstemperatur °C gemessen DIN 46453 Teil 1 | 354 | 355 | 362 | 358 | 356 | 358 | 366 |
| Durchmesserzunahme µm | 20 | 18 | 18 | 18 | 18 | 18 | 18 |

| Prüfung nach Verbackung 60 min, 210°C an Wendeln | | | | | | | |
|---|---|---|---|---|---|---|---|
| Verbackungskraft N | 1,8 | 1,6 | | | 1,8 | | |
| Wiedererweichung °C | 275 | 270 | | | 280 | | |
| i.O. = in Ordnung | | | | | | | |

### Beispiel 2:

### Polyamid-Backlack

Beispiel 2 beschreibt ebenfalls die Herstellung eines aromatischaliphatischen Polyamid und seine Anwendung als Backlack.

### Komponente A

In einem 2-l-Dreihalskolben, der mit Rührer, Heizvorrichtung, Rückflußkühlung und Stickstoffeinleitung versehen ist, werden wie in Beispiel 1
- 768 g: N-Methylpyrrolidon,
- 329 g: Xylol,
- 333 g: Decandicarbonsäure,
- 71 g: Adipinsäure,
- 85 g: Terephthalsäure,
- 309 g: einer 80/20-Mischung aus 2.4- und 2.6-Toluylendiisocyanat,
- 111 g: 2,4'/4,4'-Diisocyanatdiphenylmethan (Basonat ADS ^{R}, BASF)
umgesetzt. Der Feststoffgehalt der Lösung beträgt 40,6 % (2 Stunden bei 180°C) und die Viskosität 2310 mPas.

### Komponente B

Als Polyisocyanatkomponente B wird die handelsübliche 67 %ige Lösung eines Umsetzungsproduktes aus Trimethylolpropan und Toluylendiisocyanat mit einem NCO-Gehalt von 11,5 % verwendet (Desmodur L/67 MX ^{R}, BAYER).

Beide Komponenten werden wie in Beispiel 1 in 4 Durchzügen auf einen vorbeschichteten Kupferdraht aufgetragen und gehärtet. Die Prüfwerte sind in Tabelle 2 aufgeführt.

**Tabelle 2**

| Mischungsverhältnis Gew.TL A/ Gew.-TL B | 8,27/1 | | | 5,51/1 | | | 4,13/1 | | |
|---|---|---|---|---|---|---|---|---|---|
| Feststoffgehalt % | 42,7 | | | 43,9 | | | 44,8 | | |
| Lackierungsgeschwindigkeit m/min. | 40 | 50 | 60 | 40 | 50 | 60 | 40 | 50 | 60 |
| Oberfläche | i.O. | i.O. | i.O. | i.O. | i.O. | i.O. | i.O. | i.O. | i.O. |

| Prüfungen am Lackdraht nach DIN 46 453 Teil 1 | | | | | | | | | |
|---|---|---|---|---|---|---|---|---|---|
| Erweichungstemperatur gemessen °C | 357 | 355 | 359 | 353 | 353 | 356 | 355 | 361 | 357 |
| Haftung und Dehnbarkeit beim Wickeln % | 30 | 10 | 0 | 30 | 30 | 15 | 30 | 30 | 30 |

| Prüfung nach Verbakkung 60 min, 210°C an Wendeln | | | | | | | | | |
|---|---|---|---|---|---|---|---|---|---|
| Verbackungskraft N | 2,4 | 2,6 | 2,6 | 1,9 | 2,2 | 2,5 | 1,8 | 2,0 | 2,3 |
| Wiedererweichung °C | 281 | 290 | 273 | 271 | 258 | 265 | 268 | 259 | 256 |

### Beispiel 3:

Das Beispiel beschreibt die Herstellung eines Polyamidimid-Überzugs.

### Komponente A

In einen 2-l-Dreihalskolben, der mit Rührer, Heizvorrichtung, Rückflußkühlung und Stickstoffeinleitung versehen ist, werden 650 g N-Methylpyrrolidon, 160 g Xylol, 398 g Trimellithsäureanhydrid, 267 g 4,4'-Diisocyanatdiphenylmethan und 124 g einer 80/20-Mischung aus 2.4- und 2.6-Toluylendiisocyanat eingefüllt. Dann wird unter Rühren innerhalb 1 Stunde auf 90°C und anschließend mit 10°C pro Stunde auf 150°C geheizt. Dann wird noch eine weitere Stunde bei 150°C gerührt. Im IR-Spektrum ist die für Isocyanat typische Bande bei ca. 2260 cm⁻¹ nicht mehr festzustellen.

Die Lösung besitzt einen Feststoffgehalt von 54,0 % (2 Stunden bei 180°C) und wird mit 410 g einer 70/30-Mischung aus N-Methylpyrrolidon und Xylol auf einen Feststoffgehalt von 42 % bei einer Viskosität von 1700 mPas. verdünnt.

### Komponente B

Als Polyisocyanatkomponente B wird eine flüssige Mischung aus Basonat ADS 3374 ^{R} (BASF) und Desmodur L/67 MX ^{R} (BAYER) im Gewichtsverhältnis 1/1 verwendet.

Beide Komponenten werden für sich getrennt kontinuierlich einem Mischblock mit statischem Mischrohr zugeführt. Das Mischungsverhältnis (Gew.Tl.) beträgt 10,4/1; die Mischung besitzt unmittelbar nach der Herstellung eine Viskosität von 1840 mPas., bei einem Feststoffgehalt von 45,7 % (2 Stunden bei 180°C).

Der Lack wird mittels einer Auftragsvorrichtung - wie in Fig. 4 dargestellt - und Düsen in 8 Durchzügen auf einen Kupferdraht von 0,30 mm Durchmesser aufgetragen und in einem Horizontalofen von 2,4 m Länge bei einer Umlufttemperatur von 500°C gehärtet. Die Prüfwerte sind in Tabelle 3 durchgeführt.

**Tabelle 3**

| | | | |
|---|---|---|---|
| Lackiergeschwindigkeit m/min. | 35 | 40 | 45 |
| Oberfläche | i.O. | i.O. | i.O. |

| Prüfungen am Lackdraht nach DIN 46 453 | | | |
|---|---|---|---|
| Durchmesserzunahme µm | 33 | 33 | 32 |
| Haftung und Dehnbarkeit beim Wickeln % | 25 | 30 | 30 |
| Wärmeschock 30 min. 300°C | i.O. | i.O. | i.O. |
| Erweichungstemperatur gemessen °C | >440 | >440 | >435 |
| tan-δ-Steilanstieg °C | 254 | 253 | 252 |

### Beispiel 4:

### COOH-freier Polyamid-Backlack

Beispiel 4 beschreibt die Herstellung und Anwendung eines aromatischaliphatischen Polyamids, dessen Endgruppen anstelle von Carboxylgruppen durch Reste der Benzoesäure gebildet werden. Die Vernetzung erfolgt über Amidgruppen.

### Komponente A

In einem 2-l-Dreihalskolben, der mit Rührer, Heizvorrichtung, Rückflußkühlung und Stickstoffeinleitung versehen ist, werden wie in Beispiel 1
- 1040,0 g: N-Methylpyrrolidon,
- 230,0 g: Decandicarbonsäure,
- 48,7 g: Adipinsäure,
- 119,2 g: Terephthalsäure,
- 50,1 g: Benzoesäure,
- 274,8 g: einer 80/20 Mischung aus 2.4- und 2.6-Toluylendiisocyanat
- 169,2 g: 4,4'-Diisocyanatodiphenylmethan
umgesetzt. Die Lösung besitzt eine Viskosität von 4590 mPas./25°C und eine Säurezahl von 3 mg KOH/g. Sie wird mit 200 g Xylol auf einen Feststoffgehalt von 37,2 % (2 Stunden bei 180°C) bei einer Viskosität von 1530 mPas./25°C verdünnt.

### Komponente B

Als Polyisocyanatkomponente B wird wie in Beispiel 2 Desmodur L/67 MX ^{R} (BAYER) verwendet.

Beide Komponenten werden wie in Beispiel 1 in 4 Durchzügen auf einen vorbeschichteten Kupferdraht aufgetragen und gehärtet. Die Prüfwerte sind in Tabelle 4 aufgeführt.

**Tabelle 4**

| | | | | | | | | | |
|---|---|---|---|---|---|---|---|---|---|
| Mischungsverhältnis Gew.Tl. A/Gew.Tl. B | 11,1/1 | | | 7,4/1 | | | 5,5/1 | | |
| Feststoffgehalt (1 h 180°C) % | 39,4 | | | 40,5 | | | 41,6 | | |
| Lackiergeschwindigkeit m/min. | 30 | 40 | 50 | 30 | 40 | 50 | 30 | 40 | 50 |
| Oberfläche | i.O. | i.O. | i.O. | i.O. | i.O. | i.O. | i.O. | i.O. | n.i.O. |

| Prüfungen am Lackdraht nach DIN 46 453 Teil 1 | | | | | | | | | |
|---|---|---|---|---|---|---|---|---|---|
| Erweichungstemperatur gemessen °C | 349 | 334 | 330 | 345 | 347 | 351 | 355 | 342 | 349 |
| Haftung und Dehnbarkeit beim Wickeln % | 25 | 15 | 0 | 30 | 20 | 0 | 30 | 30 | 10 |

| Prüfung nach Verbakkung 60 min. 210°C an Wendeln | | | | | | | | | |
|---|---|---|---|---|---|---|---|---|---|
| Verbackungskraft N | 2,1 | 1,6 | 1,2 | 1,9 | 2,1 | 1,9 | 2,0 | 2,0 | 2,0 |
| Wiedererweichung °C | 283 | 259 | 222 | 251 | 245 | 226 | 237 | 231 | 225 |

## Patentansprüche

1. Verfahren zur Herstellung von Überzügen auf Drähten oder faserartigen Materialien durch Beschichten mit flüssigen, Polyisocyanate enthaltenden, unmittelbar vor dem Aufbringen hergestellten Mischungen und anschließend Aushärten, **dadurch gekennzeichnet**, daß man
A) ein oder mehrere carboxyl- und/oder amidgruppenhaltige Polymere mit mindestens zwei Carboxyl- und/oder Amidgruppen, einer Hydroxylzahl unter 50 und einem Zahlenmittel des Molekulargewichts von 200 bis 5000, im flüssigen Zustand, mit
B) einem oder mehreren Polyisocyanaten mit mindestens zwei freien Isocyanatgruppen im Molekül und einem Zahlenmittel des Molekulargewichts von 200 bis 3000, im flüssigen Zustand, und
C) gegebenenfalls einer oder mehreren weiteren lacküblichen Komponenten im flüssigen Zustand
kontinuierlich unmittelbar vor dem Aufbringen auf den Draht oder das faserartige Material in einem derartigen Verhältnis vermischt, daß auf jede Carboxylgruppe 0,5 bis 5,0 sowie auf jede Amidgruppe 0,02 - 2,0 Isocyanatgruppen entfallen, wobei die Komponenten A, B und/oder C einen oder mehrere Katalysatoren enthalten können, und daß man diese Mischung kontinuierlich jedem einzelnen in kontinuierlicher Fortbewegung befindlichen Draht oder faserartigen Material in einer dem Verbrauch entsprechenden Menge zuführt.

2. Verfahren nach Anspruch 1, dadurch gekennzeichnet, daß ein isolierender Überzug auf einem elektrisch leitfähigen Draht hergestellt wird.

3. Verfahren nach Anspruch 1, dadurch gekennzeichnet, daß der Überzug auf Glasfasern als faserartiges Material hergestellt wird.

4. Verfahren nach einem der Ansprüche 1 bis 3, dadurch gekennzeichnet, daß der flüssige Zustand der Komponenten A, B und/oder C durch Verwendung lösungsmittelfreier flüssiger Polymerer und lösungsmittelfreier flüssiger Polyisocyanate, durch Lösungsmittelzusatz bis zur Erzielung der gewünschten Applikationsviskosität und/oder durch Erwärmen erzielt wird.

5. Verfahren nach einem der Ansprüche 1 bis 4, dadurch gekennzeichnet, daß die Mischung jedem einzelnen Draht oder jedem einzelnen faserförmigen Material durch jeweils ein Kapillarrohr oder durch eine kapillarartige Bohrung zugeführt wird.

6. Verfahren nach einem der vorhergehenden Ansprüche, dadurch gekennzeichnet, daß als Komponente C ein Gleitmittel verwendet wird.

7. Vorrichtung zur Herstellung von Überzügen aus flüssigen Mehrkomponenten-Überzugsmitteln auf Drähten oder faserartigen Materialien, geeignet zur Durchführung des Verfahrens nach einem der Ansprüche 1 bis 6, mit einem Vorratsbehälter für das Mehrkomponenten-Überzugsmittel und Einrichtungen zum Kontakt der Drähte oder faserartigen Materialien mit dem Mehrkomponenten-Überzugsmittel aus dem Vorratsbehälter, mit einer Zuführungsleitung für das Mehrkomponenten-Überzugsmittel, die den Vorratsbehälter unmittelbar mit einer Einrichtung zum Mischen des Mehrkomponenten-Überzugsmittels aus dessen Einzelkomponenten verbindet, wobei der Vorratsbehälter so bemessen ist, daß bei kontinuierlicher Beschichtung die Verweilzeit des Mehrkomponenten-Überzugsmittels so kurz ist, daß seine Aushärtung im Vorratsbehälter vermieden wird, und wobei der Vorratsbehälter Einrichtungen zur Steuerung der Fördermenge des Mehrkomponenten-Überzugsmittels aus der Mischeinrichtung und/oder zur Förderung der Einzelkomponenten des Mehrkomponenten-Überzugsmittels in die Mischeinrichtung, in Abhängigkeit von der Füllstandshöhe im Vorratsbehälter, aufweist.

8. Vorrichtung nach Anspruch 7, dadurch gekennzeichnet, daß sie eine oder mehrere Kapillaren oder Bohrungen (21) als Auftragsvorrichtungen mit jeweils einem Abstreifer (23) für das Mehrkomponenten-Überzugsmittel zur waagerechten Durchführung eines Drahtes oder faserartigen Materials, wobei das Vorratsgefäßt (19) unterhalb der Abstreifer (23) liegt, und eine über eine Pumpe (20) führende Abzugsleitung für das Mehrkomponenten-Überzugsmittel aus dem Vorratsgefäßt (19) zur Bespeisung der Kapillaren oder Bohrungen (21), die zu dem zu überziehenden Draht Material führen, aufweist.

9. Verfahren nach einem der Ansprüche 1 bis 6, dadurch gekennzeichnet, daß es unter Verwendung der Vorrichtung nach einem der Ansprüche 7 oder 8 durchgeführt wird.

## Claims

1. A process for producing coatings on wires or fibre-like materials, by coating with liquid mixtures which contain polyisocyanates and which are prepared immediately before their application, and by subsequent hardening, characterised in that
A) one or more polymers containing a plurality of carboxyl and/or amide groups and having at least two carboxyl and/or amide groups, an OH number less than 50, and a number average molecular weight of 200 to 5000, in the liquid state, are continuously mixed, immediately before application to the wire or to the fibre-like material, with
B) one or more polyisocyanates containing at least two free isocyanate groups in their molecule and a number average molecular weight of 200 to 3000, in the liquid state, and
C) optionally with one or more further customary lacquer components in the liquid state,
in a ratio such that 0.5 to 5.0 isocyanate groups are allotted to each carboxyl group, and such that 0.02 - 2.0 isocyanate groups are allotted to each amide group, wherein components A, B and/or C may contain One or more catalysts, and that this mixture is continuously fed to each individual wire, which is in continuous progressive movement, in an amount corresponding to its consumption.

2. A process according to claim 1, characterised in that an insulating coating is produced on an electrically conductive wire.

3. A process according to claim 1, characterised in that the coating is produced as a fibre-like material on glass fibres.

4. A process according to any one of claims 1 to 3, characterised in that the liquid state of components A, B and/or C is obtained by the use of solvent-free, liquid polymers and solvent-free, liquid polyisocyanates, by the addition of solvent until the desired application viscosity is obtained, and/or by heating.

5. A process according to any one of claims 1 to 4, characterised in that the mixture is fed to each individual wire or to each individual fibre-like material through a capillary tube or through a capillary-like bore in each case.

6. A process according to any one of the preceding claims, characterised in that a slip additive is used as component C.

7. An apparatus for producing coatings of liquid multi-component coating media on wires or fibre-like materials, suitable for carrying out the process according to any one of claims 1 to 6, having a supply vessel for the multi-component coating medium and devices for the contact of the wire or fibre-like material with the multi-component coating medium from the supply vessel, having a feed line for the multi-component coating medium which directly connects the supply vessel to a device for mixing the multi-component coating medium from the individual components thereof, wherein the supply vessel is designed so that during continuous coating the dwell time of the multi-component coating medium is short enough so that hardening thereof in the supply vessel is prevented, and wherein the supply vessel comprises devices for controlling the feed rate of the multi-component coating medium from the mixing device and/or for feeding the individual components of the multi-component coating medium into the mixing device depending on the level in the supply vessel.

8. An apparatus according to claim 7, characterised in that it comprises one or more capillaries or bores (21) as coating devices, each of which has a stripper (23) for the multi-component coating medium for the horizontal passage of a wire or fibre-like material, wherein the supply vessel (19) is situated underneath the stripper (23), and a take-off line for the multi-component coating medium which leads from the supply vessel (23) via a pump (20) for supplying the capillaries or bores (21) which lead to the wire material to be coated.

9. A process according to any one of claims 1 to 6, characterised in that is carried out using the apparatus according to either one of claims 7 or 8.

## Revendications

1. Procédé pour l'application de revêtements sur fils métalliques ou matières fibreuses à l'aide de mélanges liquides contenant des polyisocyanates, préparés immédiatement avant l'application, l'application étant suivie d'un durcissement, ce procédé se caractérisant en ce que l'on mélange en continu, immédiatement avant application sur le fil métallique ou la matière fibreuse
A) un ou plusieurs polymères contenant des groupes carboxyle et/ou des groupes amide, à au moins deux groupes carboxyle et/ou amide, ayant un indice d'hydroxyle inférieur à 50 et un poids moléculaire moyen, moyenne en nombre, de 200 à 5000, à l'état liquide, avec
B) un ou plusieurs polyisocyanates contenant au moins deux groupes isocyanates libres dans la molécule et ayant un poids moléculaire moyen, moyenne en nombre, de 200 à 3000, à l'état liquide, et
C) le cas échéant un ou plusieurs autres composants usuels pour les peintures et vernis, à l'état liquide,
dans des proportions relatives telles que pour chaque groupe carboxyle, il y ait 0,5 à 5,0 groupes isocyanate et pour chaque groupe amide, 0,02 à 2,0 groupes isocyanate, les composants A, B et/ou C pouvant contenir un ou plusieurs catalyseurs, et on applique ce mélange en continu sur chaque fil métallique ou chaque matière fibreuse en mouvement de déplacement continu, en quantité correspondant à la quantité consommée.

2. Procédé selon revendication 1, caractérisé en ce que l'on applique un revêtement sur un fil métallique conducteur de l'électricité.

3. Procédé selon revendication 1, caractérisé en ce que la matière fibreuse sur laquelle on applique un revêtement consiste en fibres de verre.

4. Procédé selon une des revendications 1 à 3, caractérisé en ce que l'état liquide des composants A, B et/ou C est obtenu par utilisation de polymères liquides sans solvant et de polyisocyanates liquides sans solvant, par 2djonction de solvants jusqu'à la viscosité voulue pour l'application et/ou par chauffage.

5. Procédé selon une des revendications 1 à 4, caractérisé en ce que le mélange est appliqué sur chaque fil métallique ou sur chaque matière fibreuse par, un tube capillaire ou par un orifice capillaire.

6. Procédé selon une des revendications qui précédent, caractérisé en ce que le composant C est un agent lubrifiant.

7. Appareillage pour l'application de revêtements à l'aide de produits de revêtement liquides à plusieurs composants sur des fils métalliques ou des matières fibreuses, convenant pour la mise en oeuvre du procédé selon une des revendications 1 à 6, qui comprend un réservoir pour le produit de revêtement à plusieurs composants et des dispositifs pour le contact des fils métalliques ou des matières fibreuses avec le produit de revêtement à plusieurs composants provenant du réservoir; un conduit d'alimentation pour le produit de revêtement à plusieurs composants, conduit qui relie directement le réservoir à un dispositif pour le mélange du produit de revêtement à plusieurs composants à partir de ses composants individuels, le réservoir ayant une capacité telle qu'en application continue du revêtement, la durée de passage du produit de revêtement à plusieurs composants est suffisamment courte pour éviter son durcissement dans le réservoir, le réservoir étant équipé de dispositifs pour contrôler le débit du produit de revêtement à plusieurs composants sortant du dispositif de mélange et/ou le débit des composants individuels du produit de revêtement à plusieurs composants vers le dispositif de mélange selon le niveau du liquide contenu dans le réservoir.

8. Appareillage selon revendication 7, caractérisé en ce qu'il comprend un ou plusieurs capillaires ou orifices (21) constituant les dispositifs d'application, avec chacun un racleur (23) pour le produit de revêtement à plusieurs composants, pour le déplacement horizontal d'un fil métallique ou d'une matière fibreuse, le réservoir (19) étant disposé sous le racleur (23), et un conduit d'évacuation pour le produit de revêtement à plusieurs composants provenant du réservoir (19) conduisant, par l'intermédiaire d'une pompe (20), à l'alimentation des capillaires ou orifices (21) qui envoient la matière vers le fil métallique à revêtir.

9. Procédé selon une des revendications 1 à 6, caractérisé en ce qu'il est mis en oeuvre à l'aide d'un appareillage selon l'une des revendications 7 ou 8.
